# EUROPÄISCHE PATENTSCHRIFT

(11) **EP 2 639 269 B1**
(45) Veröffentlichungstag und Bekanntmachung des Hinweises auf die Patenterteilung: **25.04.2018**
(21) Anmeldenummer: 12159198.6
(22) Anmeldetag: 13.03.2012
(51) Int. Cl.: C08L 27/06, H02G 3/34, A47B 21/06, H02G 3/40

(54) **Verwendung einer Polymer-Zusammensetzung zur Herstellung eines Geräteeinbaukanals sowie aus einer derartigen Polymer-Zusammensetzung erhaltener Geräteeinbaukanal**
Use of a polymer compound for producing a device installation channel and device installation channel derived from such a polymer compound
Utilisation d'une composition polymère pour la fabrication d'un canal d'intégration d'appareils ainsi que canal d'intégration d'appareils contenant une telle composition polymère

(43) Veröffentlichungstag der Anmeldung: 18.09.2013
(73) Patentinhaber: REHAU AG + Co, 95111 Rehau (DE)
(72) Erfinder: Seidel, Bernd, 08209 Auerbach (DE); Künzel, Werner, 95111 Rehau (DE); Christ, Michael, 95028 Hof (DE); Friedrich, Jochen, 95119 Naila (DE); Salzhuber, Frank, 90419 Nürnberg (DE); Engelbrecht, Bernd, 90763 Fürth (DE)

(56) Entgegenhaltungen:
- EP-A2- 0 208 924
- EP-A2- 0 587 104
- US-A- 5 247 019
- "Vinnolit S 3268", Vinnolit GmbH ¬ Co KG , 31 January 2004 (2004-01-31), Retrieved from the Internet: URL:http://www.vinnolit.de/vproducts.nsf/a lle/0A81927A2E66285EC12573670067EC00/$file /s3268.pdf [retrieved on 2014-01-08]
- "Vinnolit K 221", Vinnolit GmbH & Co. KG , 31 January 2004 (2004-01-31), Retrieved from the Internet: URL:http://www.vinnolit.de/vproducts.nsf/a lle/D9B4BA21FA71B858C12573670067EC11/$file /k221.pdf [retrieved on 2014-01-08]

## Beschreibung

Die vorliegende Erfindung betrifft die Verwendung einer Polymer-Zusammensetzung zur Herstellung eines Geräteeinbaukanals, insbesondere zur Extrusion eines Geräteeinbaukanals, sowie einen Geräteeinbaukanal, der unter Verwendung einer derartigen Polymer-Zusammensetzung erhalten worden ist.

Im Stand der Technik bekannte Geräteeinbaukanäle, die beispielsweise aus der EP 0 208 924 A2 und der EP 0 587 104 A2 hervorgehen, werden aus Polymer-Zusammensetzungen erhalten, in denen nur unvernetzte Polymere enthalten sind. Dadurch soll eine möglichst glatte Oberfläche der Geräteeinbaukanäle erzielt werden, um zu verhindern, dass sich auf dem Geräteeinbaukanal abgesetzter Schmutz an der Oberfläche festsetzt und durch Reinigungsarbeiten nur mühsam und nicht vollständig wieder entfernt werden kann.

Aus der US 5,247,019 sind matte, optisch transparente Artikel aus einem Polymermaterial bekannt, das ein Gemisch aus PVC und vernetztem PVC umfasst. Als Anwendungen für solche Artikel sind in der US 5,247,019 Flaschen, Verpackungsfolien, Behälter, Fentserscheiben, Lichtabdeckungen, Duschtüren, Türpanele, Kunstglassblöcke und dergleichen genannt.

Vor diesem Hintergrund liegt der vorliegenden Erfindung die Aufgabe zugrunde, die Verwendung einer Polymer-Zusammensetzung zur Herstellung eines Geräteeinbaukanals und einen entsprechenden Geräteeinbaukanal zur Verfügung zu stellen, der die Nachteile des Standes der Technik überwindet. Insbesondere soll gemäß der vorliegenden Erfindung das Reinigungsverhalten von erfindungsgemäß erhaltenen Geräteeinbaukanälen speziell in Bezug auf für Geräteeinbaukanäle relevante Schmutzarten wie Wachsmalkreide, Bleistift, Buntstift, Schuhcreme, Nahrungsmittel (insbesondere Kaffee, Senf und dergleichen) und dergleichen verbessert sein.

Diese und andere Aufgaben werden durch die Verwendung einer Polymer-Zusammensetzung mit den Merkmalen des Anspruches 1 bzw. durch einen Geräteeinbaukanal mit den Merkmalen des Patentanspruchs 6 gelöst. Bevorzugte Ausführungsformen der vorliegenden Erfindung sind in den jeweils davon abhängigen Ansprüchen beschrieben.

Gemäß der vorliegenden Erfindung wurde überraschenderweise erkannt, dass trotz der erhaltenen haptisch raueren Oberfläche ein Geräteeinbaukanal mit einem verbesserten Reinigungsverhalten insbesondere gegenüber für Geräteeinbaukanäle relevante Schmutzarten dann erhalten wird, wenn der zur Herstellung des Geräteeinbaukanals verwendeten Polymer-Zusammensetzung neben dem unvernetzten Polymer auch vernetzte Polymerpartikel in einer Menge von 1 Gewichtsteil bis 18 Gewichtsteilen, bezogen auf das Gesamtgewicht des unvernetzten Polymers und der vernetzten Poylmerpartikel, mit einem mittleren Partikeldurchmesser von 10 µm bis 50 µm zugesetzt werden. Bei einem anderen mittleren Partikeldurchmesser der vernetzten Polymerpartikel kann der genannte verbesserte Reinigungseffekt nicht erzielt werden. Ebenso wird der verbesserte Reinigungseffekt bei einem Anteil der vernetzten Polymerpartikel unterhalb von 1 Gewichtsteil nicht mehr beobachtet, während ein Anteil der vernetzten Polymerpartikel von mehr als 18 Geweichtsteilen zu einer verringerten Festigkeit des erfindungsgemäßen Geräteeinbaukanals führt.

Dementsprechend liegt die vorliegende Erfindung in der Verwendung einer Polymer-Zusammensetzung, die
(A) 82 Gewichtsteile bis 99 Gewichtsteile, bezogen auf das Gesamtgewicht der Komponenten (A) und (B) eines unvernetzten Polymers;
(B) 1 Gewichtsteil bis 18 Gewichtsteile vernetzter Polymerpartikel, bezogen auf das Gesamtgewicht des Komponenten (A) und (B), mit einem mittleren Partikeldurchmesser von 10 µm bis 50 µm; und ggf.
(C) übliche Zusatzstoffe
umfasst, zur Herstellung (insbesondere zur Extrusion) eines Geräteeinbaukanals sowie eines Geräteeinbaukanals, der aus einer solchen Polymer-Zusammensetzung erhalten worden ist.

Die hierin beschriebenen Gewichtsanteile sind in Gewichtsteilen oder Gew.-% angegeben und beziehen sich jeweils auf das Gesamtgewicht des Komponenten (A) und (B) als 100 Gewichtsteile bzw. 100 Gew.-%.

Als bevorzugte Materialien für das unvernetzte Polymer der Komponente (A) in der erfindungsgemäß verwendeten Polymer-Zusammensetzung haben sich thermoplastische Polymere wie Polyvinylchlorid (PVC), Polyethylen (insbesondere Polyethylen hoher Dichte HDPE) und Polypropylen (insbesondere statistisches Polypropylen PP-R) sowie Gemische, Copolymere und Blends der genannten Polymere aus Gründen ihres bevorzugten Einsatzes zur Extrusion von Geräteeinbaukanälen erwiesen, wobei Polyvinylchlorid besonders bevorzugt ist. Als Materialien der vernetzten Polymerpartikel der Komponente (B) sind ebenfalls Polyvinylchlorid, Polyethylen (insbesondere HDPE) und Polypropylen (insbesondere PP-R) sowie Gemische, Copolymere und Blends der genannten Polymere bevorzugt, wobei insbesondere vernetzte Polymerpartikel aus dem Polymer des unvernetzten Polymermaterials der Komponente (A) aufgrund der jeweils guten Verträglichkeit mit dem Hauptmaterial der Polymer-Zusammensetzung besonders bevorzugt sind. Aus diesem Grund sind vernetzte Polyvinylchlorid-Partikel die am vorteilhaftesten eingesetzten vernetzten Polymerpartikel. Damit ist es gemäß der vorliegenden Erfindung bevorzugt, dass das unvernetzte Polymer der Komponente (A) unvernetztes Polyvinylchlorid (z. B Suspensions-PVC, Emulsions-PVC und Masse-PVC, wobei Suspensionspolymerisate bevorzugt sind) ist und/oder die vernetzten Polymerpartikel der Komponente (B) vernetzte Polyvinylchlorid-Partikel sind. Gemäß der vorliegenden Erfindung ist es besonders bevorzugt, dass das unvernetzte Polymer der Komponente (A) ein Polyvinylchlorid mit einem K-Wert von 57 bis 70 (nach Fikentscher; gemessen nach DIN 53 726), beispielsweise Vinnolit® S 3268 der Fa. Vinnolit GmbH & Co. KG oder Lacovyl® S110P der Fa. Arkema SA ist und/oder die vernetzten Polymerpartikel der Komponente (B) beispielsweise Vinnolit® K 221 Fa. Vinnolit GmbH & Co. KG sind.
Hinsichtlich der Menge der vernetzten Polymerpartikel der Komponente (A) ist eine Menge von 2 Gewichtsteilen bis 10 Gewichtsteilen bezogen auf das Gesamtgewicht der Komponenten (A) und (B) insgesamt, in der Polymer-Zusammensetzung bevorzugt. Dementsprechend beträgt der Anteil des unvernetzten Polymers der Komponente (A) vorzugsweise 90 Gewichtsteilen bis 98 Gewichtsteilen, bezogen auf das Gesamtgewicht der Komponenten (A) und (B) insgesamt, in der Polymer-Zusammensetzung. Liegt der Gewichtsanteil der vernetzten Polymerpartikel der Komponente (B) innerhalb dieser Grenzen, ist ein verbessertes Reinigungsverhalten speziell für Schmutzarten wie Schuhcreme und Nahrungsmittel, insbesondere Kaffee, zu beobachten. Andererseits ist in Bezug auf das Reinigungsverhalten des erfindungsgemäßen Geräteeinbaukanals gegenüber Verschmutzungen auf Basis von Buntstiften ein Gewichtsanteil, bezogen auf das Gesamtgewicht der Komponenten (A) und (B), der vernetzten Polymerpartikel der Komponente (B) von 6 Gewichtsteilen bis 15 Gewichtsteilen besonders bevorzugt. Entsprechend liegen die bevorzugten Gewichtsanteile der Komponente (A) in der erfindungsgemäß verwendeten Polymer-Zusammensetzung, bezogen auf das Gesamtgewicht der Komponenten (A) und (B) insgesamt, im Bereich von 85 Gewichtsteilen bis 94 Gewichtsteilen. Darüber hinaus ist in Bezug auf das Reinigungsverhalten des erfindungsgemäßen Geräteeinbaukanals gegenüber Verschmutzungen auf Basis von Wachsmalkreide und/oder Bleistift ein Gewichtsanteil, bezogen auf das Gesamtgewicht der Komponenten (A) und (B) insgesamt, der vernetzten Polymerpartikel der Komponente (B) von 4 Gewichtsteilen bis 8 Gewichtsteilen besonders bevorzugt, wobei ein Gewichtsanteil, bezogen auf das Gesamtgewicht der Komponenten (A) und (B) insgesamt, der vernetzten Polymerpartikel der Komponente (B) von 5 Gewichtsteilen bis 7 Gewichtsteilen, insbesondere etwa 6 Gewichtsteile am stärksten bevorzugt ist. Entsprechend liegen die bevorzugten Gewichtsanteile der Komponente (A) in der erfindungsgemäß verwendeten Polymer-Zusammensetzung, bezogen auf das Gesamtgewicht der Komponenten (A) und (B) insgesamt, im Bereich von 92 Gewichtsteilen bis 96 Gewichtsteilen bzw. 93 Gewichtsteilen bis 95 Gewichtsteilen, insbesondere etwa 94 Gewichtsteilen.

Hinsichtlich des mittleren Partikeldurchmessers der vernetzten Polymerpartikel der Komponente (B) ist es bevorzugt, dass dieser 20 µm bis 40 µm beträgt. Innerhalb dieses Bereichs wird ein besonders guter Reinigungseffekt an der Oberfläche eines Geräteeinbaukanals insbesondere für derartige Geräteeinbaukanäle relevanten Schmutzarten beobachtet, wobei ein mittlerer Partikeldurchmesser im Bereich von 25 µm bis 35 µm besonders bevorzugt ist. In besonders bevorzugten Ausführungsformen beträgt der mittlere Partikeldurchmesser unter diesem Gesichtspunkt 27 µm bis 33 µm, ganz besonders bevorzugt etwa 30 µm.

Komponente (C) beschreibt übliche Zusatzstoffe, die in der erfindungsgemäß verwendeten Polymer-Zusammensetzung in wirksamen Mengen vorhanden sein können. Als übliche Zusatzstoffe können beispielsweise Verarbeitungsstabilisatoren (in einer Menge von 0,6 Gewichtsteilen bis 5 Gewichtsteilen, vorzugsweise etwa 2,5 Gewichtsteile; vorzugsweise Calcium-Zink-Stabilisatoren, Zinn-Stabilisatoren, Calcium-organische Stabilisatoren, Blei-Stabilisatoren und dergleichen), Gleitmittel (vorzugsweise in einer Menge von 0,01 Gewichtsteilen bis 3 Gewichtsteilen, insbesondere bevorzugt etwa 0,3 Gewichtsteile; beispielsweise Polyethylen- oder Polypropylenwachse, Esterwachse von Glykolen, Glycerin, Penta- und Dipentaerythrit oder anderen Polyolen mit geeigneten Carbonsäuren, Montanwachse, Paraffinwachse, Metallseifen und dergleichen), Pigmente (vorzugsweise in einer Menge von 0,01 Gewichtsteilen bis 6 Gewichtsteilen; beispielsweise Titandioxid, Calciumsulfat, Ultramarinblau, Ruße und dergleichen), polymere Verarbeitungshilfsstoffe (vorzugsweise in einer Menge von 0,1 Gewichtsteilen bis 2,5 Gewichtsteilen, besonders bevorzugt etwa 1,2 Gewichtsteile; beispielsweise Methylmethacrylat-Polymere und Copolymere), Strukturierungsmittel (in beliebigen Mengen; beispielsweise Glaskugeln, Epoxidharze, Acrylatharze und dergleichen), Schlagzähmodifier (in einer Menge von 0 Gewichtsteilen bis 8 Gewichtsteilen; vorzugsweise etwa 4 Gewichtsteile; beispielsweise Acrylat-Modifier oder chloriertes Polyethylen und dergleichen), anorganische Füllstoffe oder Verstärkungsmittel (in einer Menge von 2 Gewichtsteilen bis 40 Gewichtsteilen, vorzugsweise etwa 15 Gewichtsteile; beispielsweise Kreide, Kalkstein, Marmor, Talkum, gefälltes Calciumcarbonat und dergleichen), Antistatika, UV-Absorber, Effektpigmente und dergleichen genannt werden. Darüber hinaus sind die wirksamen Mengen der möglichen Zusatzstoffe der Komponente (C) dem Fachmann bekannt. Die voranstehenden Gewichtsanteile beziehen sich wiederum jeweils auf die Summe der Komponenten (A) und (B) in der erfindungsgemäß verwendeten Polymer-Zusammensetzung als 100 Gewichtsteile.

Die vorstehenden Ausführungen hinsichtlich der Materialen für die Komponente (A) und (B), der Gewichtsanteile der Komponenten (A) und (B), des mittleren Partikeldurchmessers der vernetzten Polymerpartikel gemäß Komponente (B) sowie der üblichen Zusatzstoffe der Komponente (C) beziehen sich sowohl auf die erfindungsgemäße Verwendung der Polymer-Zusammensetzung als auch auf den erfindungsgemäßen Geräteeinbaukanal.

Die erfindungsgemäß verwendete Polymer-Zusammensetzung kann durch Mischen der Komponenten (A), (B) und ggf. (C) erfolgen. Dies geschieht zweckmäßigerweise unmittelbar vor der Verarbeitung durch Vermischen der festen, pulverförmigen Komponenten (A), (B) und (C) der Polymer-Zusammensetzung in dem Fachmann geläufigen, marktüblichen Mischvorrichtungen. Bevorzugt werden die erfindungsgemäß verwendeten Polymer-Zusammensetzungen durch Extrudieren in marktüblichen Extrudern in dem Fachmann an sich bekannter Art und Weise zu Geräteeinbaukanälen verarbeitet. Die auf diese Weise erhaltenen Geräteeinbaukanäle weisen eine matte, strukturierte Oberfläche auf und besitzen eine verbesserte Kratzfestigkeit. Während eines derartigen Extrusionsprozesses bleiben die vernetzten Polymerpartikel der Komponente (B) vorzugsweise ungeschmolzen. Die für Haubenformteile, die aufeinanderstoßenden Enden derartiger Kanäle in Eckbereichen überdecken und die vorzugsweise mittels Spritzguss erhalten werden können, kann die Oberfläche an die matte, raue Oberfläche des erfindungsgemäßen Geräteeinbaukanals angepasst werden, indem die Oberfläche der für die entsprechenden Haubenformteile verwendeten Spritzgusswerkzeuge einer Behandlung durch Sandstrahlen unterzogen wird.

Nachstehend soll die vorliegende Erfindung unter Bezugnahme auf eine Polymer-Zusammensetzung, die Polyvinylchlorid mit einem K-Wert von 57 bis 70 (nach Fikentscher; gemessen nach DIN 53 726) und marktübliche vernetzte Polyvinylchloridpartikel mit einem mittleren Partikeldurchmesser von etwa 30 µm (z.B. Vinnolit® K 221, bezogen von der Firma Vinnolit GmbH & Co. KG) enthält, beschrieben werden. Es versteht sich, dass diese Beispiele nicht als die Erfindung in irgendeiner Weise einschränkend zu betrachten sind. Sofern nichts anderes angegeben ist, sind in der vorliegenden Anmeldung einschließlich der Ansprüche sämtliche Prozentangaben und Anteilsangaben auf das Gewicht bezogen.

### Beispiele und Vergleichsspiele

### Herstellung von Geräteeinbaukanälen

Zur Herstellung der Geräteeinbaukanäle gemäß der Beispiele und Vergleichsbeispiele wurden als unvernetztes Polymermaterial Polyvinylchlorid (Vinnolit® S 3268, bezogen von der Firma Vinnolit GmbH & Co. KG) mit einem K-Wert von 68 (nach Fikentscher; gemessen nach DIN 53 726) und als Komponente (B) vernetzte Polyvinylchloridpartikel mit einem mittleren Partikeldurchmesser von etwa 30 µm (Vinnolit® K 221, bezogen von der Firma Vinnolit GmbH & Co. KG) in den nachstehender Tabelle 1 angegebenen Gewichtsanteilen und als übliche Zusatzstoffe (C), jeweils bezogen auf das Gesamtgewicht der Komponenten (A) und (B) in der Polymer-Zusammensetzung als 100 Gewichtsteile, gemahlene Kreide als Füllstoff in einem Gewichtsanteil von 15 Gewichtsteilen, ein Acrylat-Modifier als Schlagzähmodifier in einem Gewichtsanteil von 8 Gewichtsteilen, Calcium-Zink-Stabilisator als Verarbeitungsstabilisator in einem Gewichtsanteil von 2,5 Gewichtsteilen, Polypropylenwachs als Gleitmittel in einem Gewichtsanteil von 0,3 Gewichtsteilen, ein Methylmethacrylat-Polymer als Verarbeitungshilfe in einem Gewichtsanteil von 1,2 Gewichtsteilen sowie Titandioxid vom Rutil-Typ als Pigment in einem Gewichtsanteil von 3 Gewichtsteilen in einem marktüblichen Schnellmischer mischt.

**Tabelle 1: Gewichtsanteile der Komponenten (A) und (B) in den Polymer-Zusammensetzungen**

| Beispiel | Vgl.-Beispiel | Beispiel 1 | Beispiel 2 | Beispiel 3 | Beispiel 4 |
|---|---|---|---|---|---|
| Komp. (A) | 100 Gewichtsteile | 98 Gewichtsteile | 94 Gewichtsteile | 90 Gewichtsteile | 85 Gewichtsteile |
| Komp. (B) | 0 Gewichtsteile | 2 Gewichtsteile | 6 Gewichtsteile | 10 Gewichtsteile | 15 Gewichtsteile |

Nach innigem Vermischen der Komponenten in einem marktüblichen Schnellmischer wurden die erhaltenen Polymer-Zusammensetzungen gemäß der Beispiele und des Vergleichsbeispiels nacheinander mittels derselben marktüblichen Extrudiervorrichtung unter Verwendung entsprechender Extrudierwerkzeuge zu einem Geräteeinbaukanal extrudiert.

Unter Erhalt der Polymer-Zusammensetzung der Beispiele wurden Geräteeinbaukanäle mit hoher Kratzfestigkeit und angerauter matter Oberfläche erhalten, während unter Verwendung der Polymer-Zusammensetzung gemäß Vergleichsbeispiel ein Geräteeinbaukanal mit glatter Oberfläche und vergleichsweise geringer Kratzfestigkeit erhalten wurde.

### Test zum Reinigungsverhalten der Geräteeinbaukanäle gemäß der Beispiele und Vergleichsbeispiele

Die Tests zum Reinigungsverhalten erfolgten in Anlehnung an DIN 66861-1 (01/2011). Soweit hierin nichts anderes angegeben ist, erfolgten die Tests in der in der DIN 66861-1 (01/2011) beschriebene Art und Weise. Es wurde auf die Geräteeinbaukanäle gemäß der Beispiele und des Vergleichsbeispiels zunächst eine kreisförmige Fläche mit einem Durchmesser von 25 mm +/- 2 mm aufgemalt. Nach einer Einwirkzeit von 16 h wurde ein Reinigen mit einer auf Watte aufgetragenen Reinigungslösung durchgeführt, deren Zusammensetzung nachstehend angegeben ist:

### Zusammensetzung der Reinigungslösung

### Reinigungsmittel:

12,5 Gew.-% Dodecylbenzolsulfonsäure-Natriumsalz
12,5 Gew.-% Polyoxyethylen-20/Sorbitanmonostearat
5,0 Gew.-% Ethanol (96 Gew.-%)
70,0 Gew.-% desionisiertes Wasser.

Zum Erhalt der Reinigungslösung wurden 15 ml des Reinigungsmittels mit desionisiertem Wasser auf 1 I verdünnt.

Als für Geräteeinbaukanäle spezifische Verschmutzungsarten wurden die nachstehenden Medien eingesetzt:
(1) Wachsmalkreide (Firma Pelikan, Farbe Rot)
(2) Bleistift (Firma Faber Castell, Faber Castell 9000, Härte 8 B)
(3) Buntstift (Firma Faber Castell, Faber Castell Jumbo Grip, Farbe Blau)
(4) Schuhcreme (Erdal Schuhcreme, Schwarz)
(5) Kaffee
(6) Schwarzer Kugelschreiber (Pastentinte)
(7) Senf

Mit der Verwendung der voranstehend angegebenen Materialien (1 bis 7) als Verschmutzungsarten wurde der beschriebene Reinigungstest für die gemäß der Beispiele und dem Vergleichsbeispiel erhaltenen Geräteeinbaukanäle durchgeführt. Im Falle der Medien (4) bis (7) wurde nach der Einwirkzeit von 16 h zusätzlich ein Ablüften über einen Zeitraum von 24 h durchgeführt.

Die Beurteilung der Prüfungsergebnisse erfolgte gemäß DIN EN 12720 (07/2009). Dabei wurde folgendes Schema zur nummerischen Einstufung angewandt:
1) Starke Veränderung: Die Oberfläche hat sich merklich verändert und/oder Verfärbung, Farb- oder Glanzänderung, und/oder das Oberflächenmaterial hat sich teilweise oder ganz gelöst.
2) Erhebliche Veränderung: Die Prüffläche ist deutlich von der angrenzenden Umgebungsfläche zu unterscheiden, sichtbar in allen Blickrichtungen, z.B. Verfärbung, Farb- oder Glanzänderung und/oder die Oberflächenstruktur hat sich leicht verändert, z.B. Aufquellen, Fasererhebung, Rissbildung, Blasenbildung.
3) Mäßige Veränderung: Die Prüffläche ist von der angrenzenden Umgebungsfläche zu unterscheiden, sichtbar in mehreren Blickrichtungen, z.B. Verfärbung, Farb- oder Glanzänderung; keine Veränderung in der Oberflächenstruktur, z.B. Aufquellen, Fasererhebung, Rissbildung, Blasenbildung.
4) Leichte Veränderung: Die Prüffläche ist von der angrenzenden Umgebungsfläche nur zu unterscheiden, wenn sich die Lichtquelle auf der Prüfoberfläche spiegelt und zum Auge des Betrachters reflektiert wird, z.B. Verfärbung, Farb- oder Glanzänderung, keine Veränderung in der Oberflächenstruktur, z.B. Aufquellen, Fasererhebung, Rissbildung, Blasenbildung.
5) Keine Veränderung: Die Prüffläche ist von der angrenzenden Umgebungsfläche nicht zu unterschieden.

Es wurde jeweils eine zweimalige Prüfung durch zweiminütiges Reinigen durchgeführt, wobei die jeweiligen Ergebnisse einzeln in nachstehender Tabelle 2 angegeben sind. Darüber hinaus ist in Klammern die Zeit in Sekunden angegeben, bis zu der das Endergebnis der Reinigung vorgelegen hat, d.h. durch weiteres Reinigen keine Veränderungen mehr erzielt werden konnten. Bei allen Tests wurde der Reinigungsversuch nach 2 min. beendet.

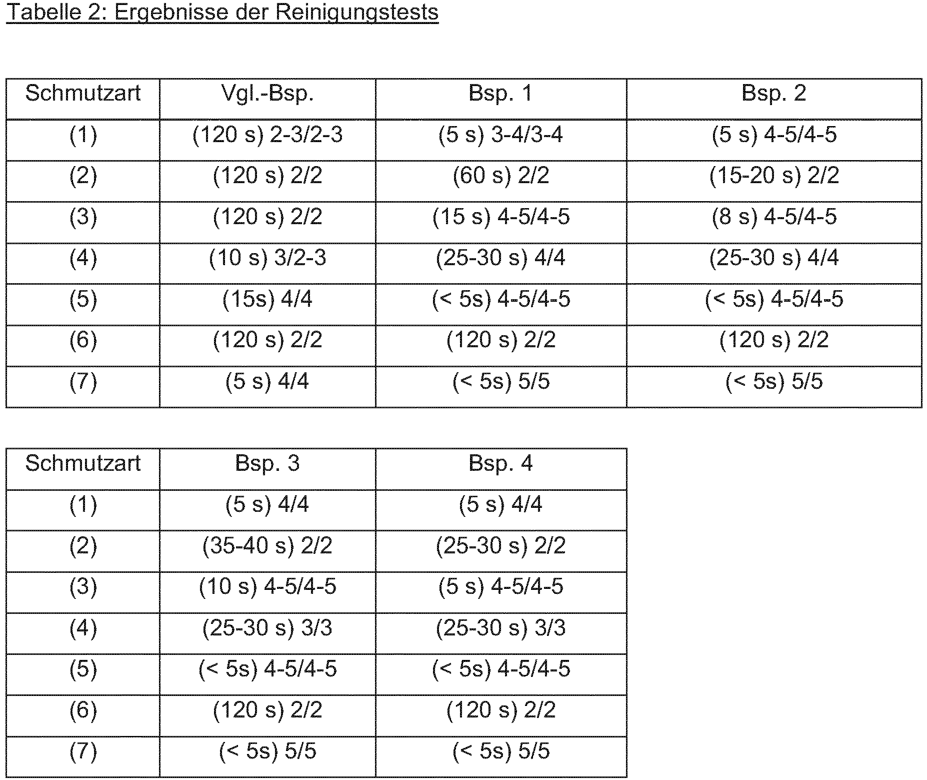

Die Ergebnisse des Reinigungstests zeigen deutlich, dass die Geräteinstallationskanäle, die unter Verwendung der erfindungsgemäßen Polymer-Zusammensetzungen gemäß der Beispiele 1 bis 4 erhalten worden sind, gegenüber denjenigen gemäß dem Vergleichsbeispiel, also ohne vernetzte Polymer-Partikel, stark verbesserte Ergebnisse zeigen. Bei der Schmutzart "Wachsmalkreide" werden bei einem Gewichtsanteil der vernetzten Polymer-Partikel von 6 Gewichtsteilen die besten Ergebnisse erzielt. Bei der Schmutzart "Bleistift" werden gleichbleibend schlechte Ergebnisse im Reinigungstest erzielt, wobei bei einem Anteil an vernetzten Polymer-Partikeln von 6 Gewichtsteilen diese Ergebnisse zumindest am schnellsten erzielt werden. Bei der Schmutzart "Buntstift" werden für sämtliche erfindungsgemäße Beispiele hervorragende Ergebnisse erzielt, wobei diese wiederum bei einem Gehalt von vernetzten Polymer-Partikeln von 15 Gewichtsteilen am schnellsten erzielt werden. Bei der Schmutzart "Schuhcreme" werden bei Gewichtsanteilen von 2 Gewichtsteilen und 6 Gewichtsteilen an vernetzten Polymer-Partikeln sehr schnell hervorragende Ergebnisse erzielt, während bei der Schmutzart "schwarzer Kugelschreiber" sowohl in den Beispielen als auch in den Vergleichsbeispielen unerfreuliche Ergebnisse erzielt werden. Hinsichtlich der Schmutzart "Kaffee" ist zu erkennen, dass für die erfindungsgemäßen Beispiele mit Polymer-Zusammensetzungen, die vernetzte Polymer-Partikel enthalten, sehr schnell wiederum hervorragende Ergebnisse erzielt werden. Gleiches gilt für die Schmutzart "Senf".

Voranstehend wurde die vorliegende Erfindung unter Bezugnahme auf Beispiele und Vergleichsbeispiele beschrieben. Für den Fachmann ist es jedoch ersichtlich, dass die Erfindung nicht auf diese Beispiele eingeschränkt ist, sondern sich der Umfang der vorliegenden Erfindung aus den beiliegenden Ansprüchen ergibt.

## Patentansprüche

1. Verwendung einer Polymer-Zusammensetzung, umfassend
(A) 82 Gewichtsteile bis 99 Gewichtsteile, bezogen auf das Gesamtgewicht der Komponenten (A) und (B), eines unvernetzten Polymers;
(B) 1 Gewichtsteil bis 18 Gewichtsteile vernetzter Polymerpartikel, bezogen auf das Gesamtgewicht der Komponenten (A) und (B), mit einem mittleren Partikeldurchmesser von 10 µm bis 50 µm; und ggf.
(C) übliche Zusatzstoffe
zur Herstellung eines Geräteeinbaukanals.

2. Verwendung nach Anspruch 1, **dadurch gekennzeichnet, dass** das unvernetzte Polymer der Komponente (A) unvernetztes Polyvinylchlorid ist und/oder die vernetzten Polymerpartikel der Komponente (B) vernetzte Polyvinylchloridpartikel sind.

3. Verwendung nach Anspruch 1 oder Anspruch 2, **dadurch gekennzeichnet, dass** die vernetzten Polymerpartikel der Komponente (B) in einer Menge von 2 Gewichtsteilen bis 10 Gewichtsteilen, bezogen auf das Gesamtgewicht der Komponenten (A) und (B), in der Polymer-Zusammensetzung enthalten sind.

4. Verwendung nach Anspruch 3, **dadurch gekennzeichnet, dass** die vernetzten Polymerpartikel der Komponente (B) in einer Menge von 4 Gewichtsteilen bis 8 Gewichtsteilen, bezogen auf das Gesamtgewicht der Komponenten (A) und (B), in der Polymer-Zusammensetzung enthalten sind.

5. Verwendung nach einem der Ansprüche 1 bis 4, **dadurch gekennzeichnet, dass** der mittlere Partikeldurchmesser der vernetzten Polymerpartikel der Komponente (B) 20 µm bis 40 µm beträgt.

6. Geräteeinbaukanal, erhalten aus einer Polymer-Zusammensetzung, umfassend
(A) 82 Gewichtsteile bis 99 Gewichtsteile, bezogen auf das Gesamtgewicht der Komponenten (A) und (B), eines unvernetzten Polymers;
(B) 1 Gewichtsteil bis 18 Gewichtsteile vernetzter Polymerpartikel, bezogen auf das Gesamtgewicht der Komponenten (A) und (B), mit einem mittleren Partikeldurchmesser von 10 µm bis 50 µm; und ggf.
(C) übliche Zusatzstoffe.

7. Geräteeinbaukanal nach Anspruch 6, **dadurch gekennzeichnet, dass** das unvernetzte Polymer der Komponente (A) unvernetztes Polyvinylchlorid ist und/oder die vernetzten Polymerartikel der Komponente (B) vernetzte Polyvinylchloridpartikel sind.

8. Geräteeinbaukanal nach Anspruch 6 oder Anspruch 7, **dadurch gekennzeichnet, dass** die vernetzten Polymerpartikel der Komponente (B) in einer Menge von 2 Gewichtsteilen bis 10 Gewichtsteilen, bezogen auf das Gesamtgewicht der Komponenten (A) und (B), in der Polymer-Zusammensetzung enthalten sind.

9. Geräteeinbaukanal nach Anspruch 8, **dadurch gekennzeichnet, dass** die vernetzten Polymerpartikel der Komponente (B) in einer Menge von 4 Gewichtsteilen bis 8 Gewichtsteilen, bezogen auf das Gesamtgewicht der Komponenten (A) und (B), in der Polymer-Zusammensetzung enthalten sind.

10. Geräteeinbaukanal nach einem der Ansprüche 6 bis 9, **dadurch gekennzeichnet, dass** der mittlere Partikeldurchmesser der vernetzten Polymerpartikel der Komponente (B) 20 µm bis 40 µm beträgt.

## Claims

1. Use of a polymer composition, comprising
(A) 82 parts by weight to 99 parts by weight, with respect to the total weight of components (A) and (B), of an un-crosslinked polymer;
(B) 1 part by weight to 18 parts by weight of crosslinked polymer particles, with respect to the total weight of components (A) and (B), with an average particle diameter of 10 µm to 50 µm; and, if applicable,
(C) common additives
for producing a device installation channel.

2. The use according to claim 1, **characterized in that** the un-crosslinked polymer of component (A) is un-crosslinked polyvinylchloride and/or the crosslinked polymer particles of component (B) are crosslinked polyvinylchloride particles.

3. The use of claim 1 or claim 2, **characterized in that** the crosslinked polymer particles of component (B) are contained in the polymer composition in an amount of 2 parts by weight to 10 parts by weight with respect to the total weight of components (A) and (B).

4. The use of claim 3, **characterized in that** the crosslinked polymer particles of component (B) are contained in the polymer composition in an amount of 4 parts by weight to 8 parts by weight with respect to the total weight of components (A) and (B).

5. The use according to one of claims 1 to 4, **characterized in that** the average particle diameter of the crosslinked polymer particles of component (B) is 20 µm to 40 µm.

6. A device installation channel, obtained from a polymer composition, comprising
(A) 82 parts by weight to 99 parts by weight with respect to the total weight of components (A) and (B), of an un-crosslinked polymer;
(B) 1 part by weight to 18 parts by weight with respect to the total weight of components (A) and (B), of crosslinked polymer particles having an average particle diameter of 10 µm to 50 µm; and, if applicable,
C) common additives.

7. The device installation channel according to claim 6, **characterized in that** the un-crosslinked polymer of component (A) is un-crosslinked polyvinylchloride and/or the crosslinked polymer particles of component (B) are crosslinked polyvinylchloride particles.

8. The device installation channel according to claim 6 or claim 7, **characterized in that** the crosslinked polymer particles of component (B) are contained in the polymer composition in an amount of 2 parts by weight to 10 parts by weight with respect to the total weight of components (A) and (B).

9. The device installation channel according to claim 8, **characterized in that** the crosslinked polymer particles of component (B) are contained in the polymer composition in an amount of 4 parts by weight to 8 parts by weight with respect to the total weight of components (A) and (B).

10. The device installation channel according to one of claims 6 to 9, **characterized in that** the average particle diameter of the crosslinked polymer particles of component (B) is 20 µm to 40 µm.

## Revendications

1. Utilisation d'une composition polymère, comprenant
(A) 82 parties en poids jusqu'à 99 parties en poids, par rapport au poids total des composants (A) et (B), d'un polymère non réticulé ;
(B) 1 partie en poids jusqu'à 18 parties en poids de particules de polymère réticulées, par rapport au poids total des composants (A) et (B), ayant un diamètre de particule moyen de 10 µm à 50 µm ; et, le cas échéant,
(C) des additifs usuels,
destinée à la fabrication d'un canal de montage d'appareil.

2. Utilisation selon la revendication 1, **caractérisée en ce que** le polymère non réticulé du composant (A) est du chlorure de polyvinyle non réticulé et/ou **en ce que** les particules de polymère réticulées du composant (B) sont des particules de chlorure de polyvinyle réticulées.

3. Utilisation selon la revendication 1 ou la revendication 2, **caractérisée en ce que** les particules de polymère réticulées du composant (B) sont contenues dans une quantité de 2 parties en poids jusqu'à 10 parties en poids, par rapport au poids total des composants (A) et (B), dans la composition polymère.

4. Utilisation selon la revendication 3, **caractérisée en ce que** les particules de polymère réticulées du composant (B) sont contenues dans une quantité de 4 parties en poids jusqu'à 8 parties en poids, par rapport au poids total des composants (A) et (B), dans la composition polymère.

5. Utilisation selon l'une quelconque des revendications 1 à 4, **caractérisée en ce que** le diamètre de particules moyen des particules de polymère réticulées du composant (B) est de 20 µm à 40 µm.

6. Canal de montage d'appareil, obtenu à partir d'une composition polymère, comprenant :
(A) 82 parties en poids jusqu'à 99 parties en poids, par rapport au poids total des composants (A) et (B), d'un polymère non réticulé ;
(B) 1 partie en poids jusqu'à 18 parties en poids de particules de polymère réticulées, par rapport au poids total des composants (A) et (B), ayant un diamètre de particules moyen de 10 µm à 50 µm ; et, le cas échéant,
(C) des additifs usuels.

7. Canal de montage d'appareil selon la revendication 6, **caractérisé en ce que** le polymère non réticulé du composant (A) est du chlorure de polyvinyle non réticulé et/ou **en ce que** les particules de polymère réticulées du composant (B) sont des particules de chlorure de polyvinyle réticulées.

8. Canal de montage d'appareil selon la revendication 6 ou la revendication 7, **caractérisé en ce que** les particules de polymère réticulées du composant (B) sont contenues dans une quantité de 2 parties en poids jusqu'à 10 parties en poids, par rapport au poids total des composants (A) et (B), dans la composition polymère.

9. Canal de montage d'appareil selon la revendication 8, **caractérisé en ce que** les particules de polymère réticulées du composant (B) sont contenues dans une quantité de 4 parties en poids jusqu'à 8 parties en poids, par rapport au poids total des composants (A) et (B), dans la composition polymère.

10. Canal de montage d'appareil selon l'une quelconque des revendications 6 à 9, **caractérisé en ce que** le diamètre de particules moyen des particules de polymère réticulées du composant (B) est de 20 µm à 40 µm.
